Europäisches Patentamt

(19) European Patent Office

Office européen des brevets

(11) **EP 0 460 237 B1**

(12) **EUROPEAN PATENT SPECIFICATION**

(45) Date of publication and mention
of the grant of the patent:
**06.03.1996 Bulletin 1996/10**

(21) Application number: **91900955.5**

(22) Date of filing: **21.12.1990**

(51) Int. Cl.$^6$: **B23B 51/00**

(86) International application number: **PCT/JP90/01670**

(87) International publication number:
**WO 91/09698 (11.07.1991 Gazette 1991/15)**

(54) **THROW-AWAY DRILL**

BOHRER MIT WEGWERFEINSATZ

FORET JETABLE

(84) Designated Contracting States:
**DE ES FR GB IT SE**

(30) Priority: **25.12.1989 JP 337944/89
29.12.1989 JP 339986/89
29.12.1989 JP 339987/89
05.02.1990 JP 26752/90
05.02.1990 JP 26753/90
05.02.1990 JP 26755/90
10.07.1990 JP 183571/90**

(43) Date of publication of application:
**11.12.1991 Bulletin 1991/50**

(73) Proprietor: **SUMITOMO ELECTRIC INDUSTRIES,
LTD.
Osaka-shi, Osaka 541 (JP)**

(72) Inventors:
• **NOGUCHI, Kazuo,
c/o Itami Works of Sumitomo
Itami-shi, Hyogo 664 (JP)**
• **MORI, Yoshikatsu,
c/o Itami Works of Sumitomo
Itami-shi, Hyogo 664 (JP)**
• **KITAGAWA, Nobuyuki,
c/o Itami Works of Sumitomo
Itami-shi, Hyogo 664 (JP)**
• **NOMURA, Toshio,
c/o Itami Works of Sumitomo
Itami-shi, Hyogo 664 (JP)**
• **ISOBE, Kazutaka,
c/o Itami Works of Sumitomo
Itami-shi, Hyogo 664 (JP)**

(74) Representative: **Grosse, Wolfgang et al
Patentanwälte Kırschner & Grosse
Forstenrieder Allee 59
D-81476 München (DE)**

(56) References cited:
| DE-C- 262 345 | JP-A- 6 248 408 |
| JP-A- 6 294 206 | JP-U- 6 215 409 |
| JP-Y- 4 112 144 | US-A- 4 293 253 |

## Description

The present invention relates to a drill comprising the features of the preamble of claim 1 (cf. JP-A-41-12144), and a shank for a drill comprising the features of the preamble of claim 10 which are mainly applied to piercing of steel. Preferred embodiments relate to the structure of and materials for a throw-away tipped drill whose insert portion is separably mechanically connected with a shank portion.

Background Art

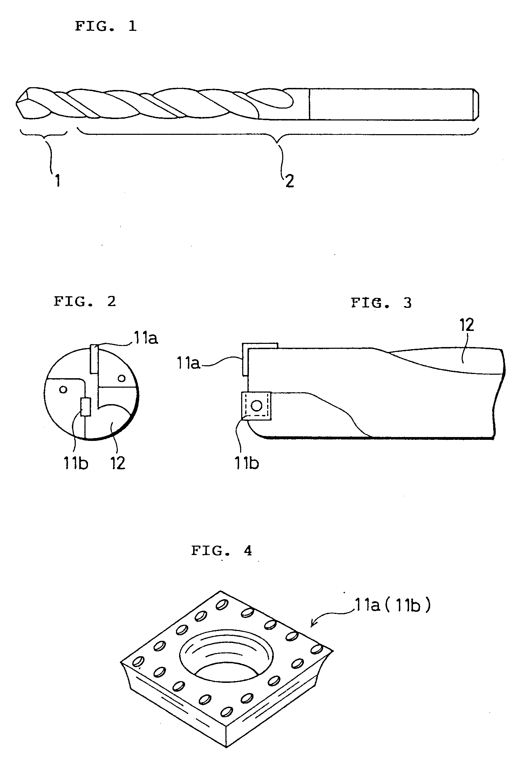

A drill is one of cutting tools which are used for piercing of steel products and the like. For example, the structure of a twist drill is shown in Fig. 1. The twist drill is formed by a cutting portion 1 which is applied to piercing, and a shank portion 2 which is not concerned in cutting but is mainly used for discharging chips and to be mounted on a chuck portion etc. of a drilling machine or the like.

In general, materials for drills are high-speed steel (rapid tool steel) and cemented carbide. The high-speed steel, which is excellent in toughness but inferior in wear resistance, is improper for high-speed cutting. On the other hand, the cemented carbide, which is excellent in wear resistance and accuracy characteristics as a tool but has a brittle property, may have been broken when used for a machine tool having low rigidity, for example.

In order to improve these, there has been considered a structure of coating a cutting portion of high-speed steel with hard TiN, or a structure of preparing a cutting portion from cemented carbide and brazing the same.

There have further been devised a structure of brazing different materials of cemented carbide (P30 and D30) for improving wear resistance and toughness etc. (Japanese Utility Model Laying-Open Gazette No. 58-143115) or a structure of metallurgically attaining integration/connection (Japanese Utility Model Laying-Open Gazette No. 62-46489), as well as that attained by noting difference between characteristics required for a central portion and an outer peripheral portion of a drill and preparing the central portion and the outer peripheral portion from different materials of cemented carbide in a double structure (Japanese Patent Laying-Open Gazette No. 62-218010), or a method of forming such a double structure by injection molding (Japanese Patent Laying-Open Gazette No. 63-38501 or 38502), and the like. Further, there is a structure of forming the material for a drill by cermet, in order to improve adhesion resistance of the drill (Japanese Patent Laying-Open Gazette No. 62-292307), or the like.

A cutting portion and a shank portion of a drill are used under different loaded conditions. Therefore, characteristics required for the respective portions of the drill are different from each other. For example, wear resistance, adhesion resistance and the like are required for a cutting edge portion of the cutting portion, while toughness for maintaining strength of the tool is required for the shank portion. As to the cutting edge portion of the cutting portion, further, different characteristics are required since cutting speeds are different at its central and outer peripheral portions.

In a drill whose cutting portion is coated in order to satisfy such complicated requirements for the characteristics which must be provided in such a drill, at least a coating layer of a front flank side is inevitably removed when resharpening of the drill is carried out as performed in general, and most of the coating effect is lost. A drill having such a structure that cemented carbide is brazed to its cutting portion cannot be applied to deep hole drilling of an uncuttable material since brazing itself is a method which is essentially inferior in thermal strength and mechanical strength. Further, when cemented carbide is brought into a coarse grain state or a high binder phase state in order to improve toughness of a shank portion of a drill, the strength of the material is reduced or the elastic limit of distortion is reduced on the contrary, and hence the shank portion is undesirably broken during perforating, due to vibration of a workpiece, instable rotation of a cutting machine and the like. Also as to the cost for a drill having a large diameter and a long drill for a deep hole, those entirely prepared from cemented carbide are problematically high-priced both in alloy costs and processing costs.

In order to solve the aforementioned problems, there has recently been devised the so-called throw-away tipped drill, whose cutting portion and shank portion are separately manufactured and mechanically connected to be separable from each other, thereby enabling application of materials having characteristics required for the respective portions.

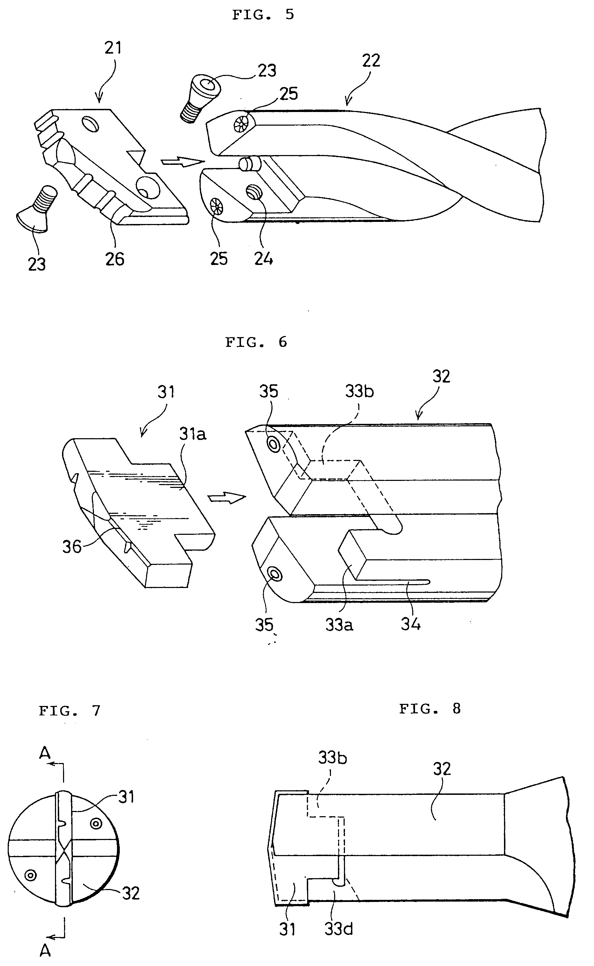

Conventional throw-away tipped drills include those shown in Figs. 2 to 5, for example. Among them, that shown in Figs. 2 to 4 is a two-flute throw-away tipped drill. In this drill, tips 11a and 11b are fixed to the outer peripheral portion and the inner peripheral portion of a forward end of a shank portion 12 by screwing respectively. On the other hand, Fig. 5 shows a typical example of a one-flute throw-away tipped drill. In this drill, a cutting portion 21 is fitted in a shank portion 22 as shown by an arrow, and fixed to a screwhole 24 by a screw 23. A coolant is directly supplied from a coolant supply hole 25 to the cutting edge of the cutting portion 21. A chip breaker 26 for chip parting control is formed on the cutting edge of the cutting portion 21.

As another type of one-flute throw-away tipped drill, there is a spade drill which is defined in JIS B0171-1609. This spade drill is common to the aforementioned each throw-away tipped drill in a point that a plate-type cutting portion is fixed to the forward end of a shank portion by screwing.

The aforementioned conventional throw-away tipped drills, whose cutting portions and shank portions are formed of different members, can solve the various problems of the integral drill whose cutting portion is integrated with and made of the same material as its shank portion and the brazed drill formed by brazing cemented carbide to its cutting portion.

However, every one of these throw-away tipped drills, whose cutting portions and shank portions are connected with each other by screwing, causes the following problems:

(1) When the screwhole is increased in size, tip strength is reduced.
(2) In order to reduce the size of the screwhole, it is necessary to use a small screw, and hence an allowable load for the screw is reduced to inevitably lower joint strength between the cutting portion and the shank portion.
(3) Further, a small screw is inferior in workability in assembling. In the conventional throw-away tipped drill, consequently, the cutting portion and the shank portion have been easily broken during perforating due to insufficiency in strength of the cutting portion and insufficiency in connection strength between the cutting portion and the shank portion in the case of a small-diameter drill of not more than 20 mm in diameter.

Furthermore, in Japanese Utility Model Registration Publication No. 41-12144 a throw-away tipped drill is shown with a cut provided at the tip end of a main rod and a cut-out is provided in the center of the bottom portion of said cut, a through hole which communicates with to the cut-out is formed from the opposing sides of the main rod and in parallel to the cut, while a blade plate with two legs provided slantwise and having projections; their tip end provided in the center of the foundation portion is disposed in such a manner that the blade plate is positioned in the cut of the main rod and the legs of the blade plate are positioned in the cut-out, the projections of the legs are positioned in the through holes and the blade plate detachably mated can be exchanged. The aforementioned tool has the disadvantage that depending on the tolerances of the cut and the cut-out, the thickness of the blade plate, the lengths of the legs, the accuracy of the projections and the through holes, the blade plate will not in every case become really fixed on the main rod. Furthermore, this fixing of the blade plate is unsuitable for modern hard and brittle blades e.g. of sintered materials, because the blades would be subject to destruction by trying to place the projections of the legs in the through holes.

In consideration of the aforementioned problems of the prior art, a first object of the present invention is to provide a throw-away tipped drill whose insert portion and shank portion can be fastened with each other with no screwing.

A second object of the present invention is to provide a throw-away tipped drill which has excellent wear resistance and adhesion resistance in an insert portion of the drill with a shank portion having sufficient toughness as breakage resistance, accompanied by no resharpening for continuous use. These objects are achieved by means of a drill having the features of claim 1 and a shank for a drill having the features of claim 10.

Disclosure of the Invention

The following first example to third example correspond as means for attaining the aforementioned first object, while the following fourth example to sixth example correspond as means for attaining the aforementioned second object.

First Example

A throw-away tipped drill according to the first example comprises an insert portion for cutting a workpiece and a shank portion to be mounted on a prescribed position of a cutting machine, and the insert portion is separably mechanically connected with the shank portion. Further, the insert portion and the shank portion have mutually engaging portions in joints thereof respectively, and a slit is formed in at least either the insert portion or the shank portion so that opposite surfaces of such a slit mutually move for elastic deformation in engagement, whereby the insert portion is fixed to the shank portion by the elastic force.

According to this example, the insert portion and the shank portion are connected with each other using elastic force which is caused by elastic deformation upon mutual movement of the opposite surfaces of the slit in an engaging state of both portions, whereby the insert portion can be connected with/fixed to the shank portion by simply press-fitting the insert portion into the shank portion without employing any fastening component such as a screw.

Second Example

A throw-away tipped drill according to the second example comprises an insert portion for cutting a workpiece and a shank portion to be mounted on a prescribed position of a cutting machine, and the insert portion is separably mechanically connected with the shank portion. Further, the insert portion and the shank portion have mutually engaging portions in joints thereof respectively. The mutually engaging portions are formed by a held portion which is formed in the insert portion, and holding portions of the shank portion for holding held surfaces which are provided on left and right sides of the held portion. The feature of this example resides in a point that both or either ones of the held surfaces provided on both sides of the held portion and opposite holding surfaces of the holding portions are tapered and the angle of such tapering is so formed that the holding surfaces and the held surfaces come into surface contact with each other and enter press-fitted states in an engaging state of the insert portion and the shank portion.

According to this example, elastic force which is based on elastic deformation of the holding portions or the held portion acts on the overall engaging surfaces in the engaging state. As the result, frictional force is caused by a wedge action between the engaging surfaces, so that the insert portion is fixed to the shank portion. Therefore, it is possible to assemble the drill by simply pressing the held portion of the insert portion into the holding portions of the shank portion with no requirement for fastening means such as screwing.

Third Example

The third example relates to a shank for a throw-away tipped drill. The inventive shank for a throw-away tipped drill is separably mechanically connected with an insert portion for cutting a workpiece, to be mounted on a prescribed position of a cutting machine, and has holding portions for mutually engaging with the insert portion and holding the insert portion. The feature of this example resides in a point that slits are provided in the holding portions to connect/fix the insert portion by holding a held portion of the insert portion with elastic force which is caused by elastic deformation upon mutual movement of opposite surfaces of these slits in engagement.

According to this example, the insert portion can be connected with/fixed to the shank by simply press-fitting the insert portion into the shank without employing any fastening component such as a screw.

Fourth Example

A throw-away tipped drill according to the fourth example comprises an insert portion for cutting a workpiece and a shank portion to be mounted on a prescribed position of a cutting machine, and the insert portion is separably mechanically connected with the shank portion. The feature of this example resides in that its insert portion is made of surface-coated cemented carbide or cemented carbide, and the shank portion is formed of steel.

When surface-coated cemented carbide is employed as the material for the insert portion, the surface coating material is preferably prepared from one or more materials selected from carbides, nitrides, borides, carbo-nitrides, carbo-oxides, carbo-oxy-nitrides and boronitrides of metals belonging to the groups IVa, Va and VIa of the periodic table such as $A\ell_2O_3$, TiC, TiN, TiCN, $TiA\ell N$ and the like. This surface coat may be formed not only in a single layer but also in a plurality of layers. Alternatively, it may be provided in mixed multiple layers obtained by forming a plurality of coating layers in which at least two of the aforementioned materials are mixed.

It is possible to use either surface treatment method of the so-called physical vapor deposition and chemical vapor deposition as a method of surface-coating the cemented carbide.

The cemented carbide serving as the base material for the insert portion is preferably formed by a hard phase which is made of a B1 type solid solution consisting of WC and one or more types of carbides, nitrides and carbo-nitrides of metals belonging to the groups IVa, Va and VIa of the periodic table, and a binder phase which is made of an iron family metal mainly composed of 5 to 30 percent by volume of Co.

A system shown in Figs. 2 to 4, that shown in Fig. 5, and the so-called self-grip type throw-away tipped drill having the structure shown in the aforementioned first example or second example can be applied as a system of connecting the insert portion and the shank portion of the throw-away tipped drill.

Characteristics required for a drill are roughly classified into wear resistance and adhesion resistance of an insert portion and breakage resistance, represented by toughness, of a shank portion. In this example, heat resistance and hardness are improved by employing cemented carbide as the material for the insert portion. Thus, high-speed cutting is enabled, and wear resistance and adhesion resistance are improved as compared with a case of employing high-speed steel (rapid tool steel). In addition, wear resistance and adhesion resistance are further improved by coating the surface of the insert portion which is made of cemented carbide.

Further, since steel is employed as the material for the shank portion, the drill is excellent in toughness and has good breakage resistance, while it is possible to reduce the material cost.

Fifth Example

A throw-away tipped drill according to the fifth example also comprises an insert portion and a shank portion, and the insert portion is separably mechanically connected with the shank portion. The feature of this example resides in a point that its insert portion is made of a silicon nitride sintered body, and the shank portion is formed of steel.

As to the silicon nitride sintered body for the insert portion, a crystal phase of $Si_3N_4$ or SIALON ($Si_{0\ to\ z}\ Al_z\ O_z\ N_{8-z}$ : $z = 0$ to 4.2) preferably occupies at least 80 percent by weight in the sintered body. More preferably, this silicon nitride sintered body contains 5 to 20 percent by weight of $A\ell_2O_3$, $Y_2O_3$, MgO and an oxide of a rare earth metal, while strength is reduced due to reduction of density if the content is not more than 5 percent by weight, and heat resistance, thermal cracking resistance and wear resistance are reduced if the content is in excess of 15 percent by weight.

Further, the surface of the insert portion may be subjected to coating of TiC, TiN, TiCN, TiAℓN, Aℓ$_2$O$_3$ or the like in a single layer or multiple layers.

Similarly to the aforementioned third example, the system shown in Figs. 2 to 4, that shown in Fig. 5, and the self-grip system can be mainly applied as connection systems for the insert portion and the shank portion of the throw-away tipped drill according to this example.

According to this example, heat resistance and wear resistance are extremely increased by employment of a silicon nitride sintered body as the material for the insert portion, as compared with a case of employing general high-speed steel (rapid tool steel) or cemented carbide. Thus, adhesion resistance is also improved.

Further, since steel is employed as the material for the shank portion, the drill is excellent in toughness and has good breakage resistance, and it is possible to reduce the material cost, similarly to the aforementioned fifth example.

Sixth Example

A throw-away tipped drill according to the sixth example also comprises an insert portion and a shank portion. The insert portion of the throw-away tipped drill according to this example is formed of cermet. This cermet is formed of a hard dispersed phase and a metallic binder phase. The hard dispersed phase is mainly composed of titanium and any one of a carbide, a nitride and a double carbo-nitride of at least one of metals belonging to the groups IVa, Va and VIa of the periodic table, excluding titanium. The metallic binder phase is mainly composed of nickel and cobalt. The composition of the hard dispersed phase is expressed as $(Ti_aM_b)(C_cN_d)$. Symbol M represents at least one of metals belonging to the groups IVa, Va and VIa of the periodic table, excluding Ti. Symbols $\underline{a}$, $\underline{b}$, $\underline{c}$ and $\underline{d}$ show molar fractions. Symbols $\underline{a}$, $\underline{b}$, $\underline{c}$ and $\underline{d}$ are defined in the following relational expressions:

$$a + b = 1$$

$$c + d = 1$$

$$0.5 \leq a \leq 0.95$$

$$0.1 \leq d \leq 0.7$$

The hard dispersed phase comprises at least a fine grain group and a coarse grain group. The mean particle diameter of the fine grain group is at least 0.2 μm and not more than 0.6 μm. The mean particle diameter of the coarse grain group is at least 1 μm and not more than 3 μm. The volume ratio of the fine grain group to the aforementioned coarse grain group is at least 0.3 and not more than 3. The rate of the metallic binder phase contained in the cermet is at least 5 percent by weight and not more than 30 percent by weight.

The shank portion of the throw-away tipped drill according to this example is separably mechanically connected with the insert portion. The shank portion is formed of alloy steel. As to the coupling system for the insert portion and the shank portion of the throw-away tipped drill according to this example, a system which is similar to that of the aforementioned fourth example or fifth example is applicable.

Reasons for restriction of compositions, particle diameters etc. in the throw-away tipped drill according to this example are now described.

When wear of a cutting face progresses due to adhesion of a workpiece and the drill material, the life of the drill comes to an end due to adhesion of chips. According to this example, the composition and the particle diameter of the hard dispersed phase are restricted in order to improve wear resistance and adhesion resistance. The amount of titanium in a metal atom group which is contained in the hard dispersed phase is restricted within a range of 0.5 to 0.95 in molar fraction. If the amount is less than 0.5, wear resistance and adhesion resistance are reduced. If the amount exceeds 0.95, on the other hand, the sintering property of cermet itself is deteriorated. Since affinity with iron is reduced by such a high content of titanium, the machined surface of a workpiece containing iron is improved.

The rate of nitrogen in a nonmetal atom group which is contained in the hard dispersed phase is restricted within a range of 0.1 to 0.7 in molar fraction. If the rate is less than 0.1, nitrogen shows no effect of suppressing grain growth of the hard dispersed phase in sintering of cermet. If the rate exceeds 0.7, on the other hand, the sintering property of cermet itself is deteriorated.

The hard dispersed phase is made of a mixture of a fine grain group having particle diameters of 0.2 to 0.6 μm, and a coarse grain group having particle diameters of 1 to 3 μm. The volume ratio of the fine grain group to the coarse grain group is restricted within a range of 0.3 to 3. If this volume ratio is less than 0.3, toughness of cermet itself is so deteriorated that chipping is caused in the cutting edge portion of the drill. If this volume ratio exceeds 3.0, on the other hand, thermal cracking is caused in the cutting edge of the drill.

The amount of the metallic binder phase is restricted within a range of 5 to 30 percent by weight. If the amount is less than 5 percent by weight, toughness of cermet itself is so insufficient that chipping is caused in the cutting edge of the drill. If the amount exceeds 30 percent by weight, on the other hand, wear resistance is so insufficient that extreme wear is caused in a flank or a margin portion of the cutting edge.

Alloy steel is employed for the shank portion of the throw-away tipped drill according to this example. The alloy steel shows excellent toughness against slight impact since its elastic deformation range is wide, and hence the shank portion is hard to break. While steel materials are roughly classified into carbon steel, alloy steel and high alloy steel, alloy steel (nickel chrome molybdenum steel, chrome molybdenum steel, tool steel or the like, for example) is employed in this example in consideration of both of wear resistance and workability. In the case of an insert type one-flute throw-away tipped drill, it is necessary to also consider elasticity in particular, and spring steel or the like is also employed. Further, alloy steel which is generally easily manufacturable is employed for the shank portion and sintered hard alloy which requires complicated manufacturing steps is employed only for the insert portion, whereby it is possible to reduce the manufacturing cost, and this example is also advantageous in cost.

Brief Description of the Drawings

Fig. 1 is a diagram showing a general twist drill.

Fig. 2 is a front elevational view showing an example of a conventional two-flute throw-away tipped drill, Fig. 3 is a right side elevational view thereof, and Fig. 4 is a perspective view showing its tip in an enlarged manner.

Fig. 5 is an explbded perspective view of a conventional one-flute screwed type throw-away tipped drill.

Fig. 6 is an exploded perspective view showing the state of a portion around joints of an insert portion 31 and a shank portion 32 of a throw-away tipped drill according to an embodiment of the present invention, Fig. 7 is a front elevational view of the embodiment, and Fig. 8 is a right side elevational view thereof.

Fig. 9 is a sectional view taken along the line A - A in Fig. 7, showing a state at a point of time for starting press fitting of the insert portion 31 into the shank portion in the embodiment shown in Fig. 6, and Fig. 10 is the same sectional view showing such a state that the insert portion 31 is connected with/fixed to the shank portion 32 in this embodiment.

Fig. 11 is a sectional view showing the embbdiment of the present invention, in which slits 34 are provided on both sides of holding portions 33a and 33b.

Fig. 12 is a sectional view showing a state at a point of time for starting press fitting of an insert portion 31 into a shank portion 32 in another embbdiment of the present invention, and Fig. 13 is a sectional view showing a connected/fixed state of this embodiment.

Fig. 14 is a sectional view taken along the line B - B in Fig. 10 or Fig. 13, and Fig. 15 is a sectional view taken along the line B - B in Fig. 11.

Fig. 16 is a sectional view showing an example of another configuration of the section taken along the line B - B in Fig. 10 or Fig. 13, and Fig. 17 is a partially enlarged sectional view thereof.

Fig. 18 is a diagram showing an embodiment of an insert portion comprising displacement preventing means Ear joints of an insert portion 31 and a shank portion 32, and Fig. 19 is a sectional view taken along the line D - D in Fig. 18, showing such a state that the insert portion 31 of the embodiment engages with the shank portion 32.

Fig. 20 is a perspective view showing the insert portion 31 of this embodiment.

Fig. 21 is a distribution chart showing particle size distribution of a hard dispersed phase or a cermet alloy in the case of forming an insert portion of a throw-away tipped drill embodying the present invention by the cermet alloy.

Best Modes for Carrying Out the Invention

Embodiments of First Example

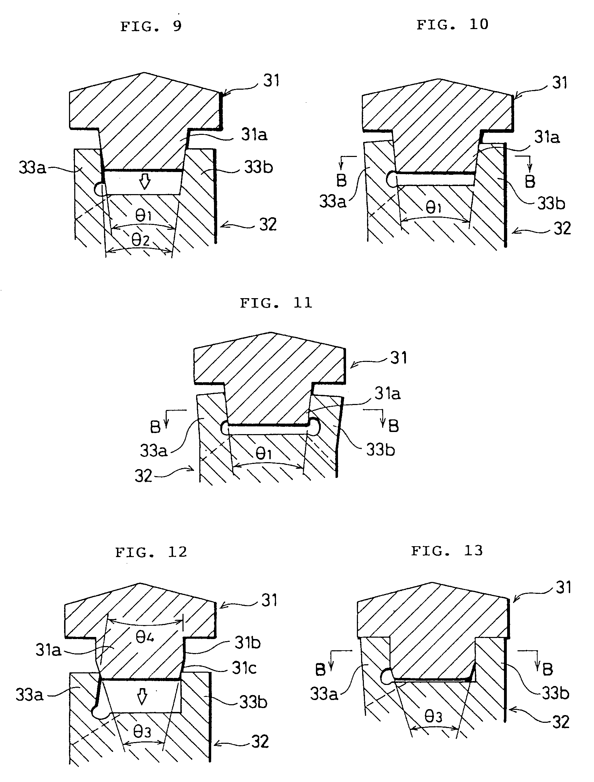

An embodiment of the first example is now described on the basis of Figs. 6 to 10. Referring to Fig. 6, the throw-away tipped drill of this embodiment employs the so-called self-grip system, in which an insert portion 31 is fitted into a shank portion 32 along the direction shown by an arrow in the figure, so that the insert portion 31 and the shank portion 32 are connected without using a screw etc. In this embodiment, a state in which the insert portion 31 and the shank portion 32 are connected is as shown in Figs. 7 and 8. In this connected state, the insert portion 31 is fixed to the shank portion 32 by frictional force which is caused since side portions of a held portion 31a of the insert portion 31 come into contact with inner end surfaces of holding portions 33a and 33b of the shank portion 32. With reference to Figs. 9 and 10, the state of connection attained by engagement of the insert portion 31 and the shank portion 32 in this embodiment is explained as follows: In a state before engagement of the insert portion 31 and the shank portion 32, an angle $\theta_1$ formed between left and right side portions of the held portion 31a is slightly larger than an angle $\theta_2$ formed between opposite inner end surfaces of the holding portions 33a and 33b, as shown in Fig. 9. When the insert portion 31 is press-fitted into the shank portion 32, the angle $\theta_2$ is gradually expanded by a wedge action due to tapering of the left and right side portions of the held portion 31a and formation of a slit 34 on the side of the holding portion 33a. While the angles are in a relation $\theta_1 > \theta_2$, the held portion 31a and the holding portion 33a are in contact with each other only on an upper end of the inner side surface of the holding portion 33a. When $\theta_2$ coincides with $\theta_1$, the contact areas between

6

both side portions of the held portion 31a and the inner end surface of the holding portion 33a are maximized as shown in Fig. 10. The press fitting is stopped in this state, so that pressing force is caused in the contact surface with the held portion 31a by elastic force resulting from elastic deformation of the holding portion 33a, and the insert portion 31 is connected with/fixed to the shank portion 32 by frictional force between the contact surfaces.

A coolant is directly supplied to the cutting edge of the insert portion 31 from a coolant supply hole 35. A chip breaker 36 for parting chips is formed on the cutting edge of the insert portion 31.

The angle $\theta_1$ formed by the left and right side portions of the held portion 31a is set at an angle of 4° to 20°, preferably 8° to 15°. The reason for such setting of the range of the value of the $\theta_1$ is as follows: First, if $\theta_1$ is reduced, positioning accuracy of the insert portion 31 in the connected state shown in Fig. 10 is extremely influenced by dimensional accuracy of the held portion 31a and the holding portions 33a and 33b. If $\theta_1 < 4°$, it is extremely difficult to implement dimensional accuracy of the held portion 31a and the holding portions 33a and 33b for attaining desired positioning accuracy of the insert portion 31. If $\theta_1$ is increased, on the other hand, a component of pressing force, which is applied to the held portion 31a from the holding portions 33a and 33b, along the axial direction of the shank portion 32 is increased. Since this force acts in such a direction that the insert portion 31 is disengaged against frictional force, the force for fixing the insert portion 31 is weakened as $\theta_1$ is increased. It has been confirmed that desired fixing force for the insert portion 31 with respect to the shank portion 32 cannot be obtained when $\theta_1$ exceeds 20°.

As another embodiment of the shank portion 32, slits 34 may be formed not only on the side of the held portion 33a but also on the side of the holding portion 33b, as shown in Fig. 11. In this case, both of the holding portions 33a and 33b are flared as the insert portion 31 is press-fitted into the shank portion 32, so that the held portion 31 is held by the elastic force. Also in this case, the value of $\theta_1$ is set at 4° to 20°, similarly to the above.

Still another embodiment as to the configurations of the held portion 31a and the holding portions 33a and 33b is shown in Figs. 12 and 13. In this embodiment, a side portion of the held portion 31a of the insert portion 31 is formed by a tapered portion 31c which forms an angle $\theta_3$ with a parallel portion 33b, as shown in Fig. 12. Further, the inner end surfaces of the holding portions 33a and 33b of the shank portion 32 have tapering (angle $\theta_4$) which is inverse to the tapering (angle $\theta_1$) of the held portion shown in Fig. 9 etc. As the insert portion 31 is press-fitted along the arrow direction shown in Fig. 12, opposite surfaces of slits 34 relatively move and the held portion 33a is flared by a wedge action of the tapered portion 31c, and when the press fitting is further performed, the insert portion is fixed in the state shown in Fig. 13, i.e., in such a state that the upper end surface of the holding portions 33a and 33b are in contact with left and right lower end surfaces of the insert portion 31. $\theta_3$ and $\theta_4$ are so set that the inner end surfaces of the holding portions 33a and 33b are parallel to each other and contact areas with the side portions of the held portion 31a are maximized in this state. Also since the inner end surfaces of the holding portions 33a and 33b of the shank portion 32 are parallel to each other, it is possible to attain sufficient holding power although the contact areas are reduced. Also in this embodiment, the held portion 31a is held by elastic force following elastic deformation of the holding portion 33a having the slit 34 similarly to the embodiment of Fig. 9, and the insert portion 31 is connected with/fixed to the shank portion 32 by frictional force. According to this embodiment, the upper end surfaces of the holding portions 33a and 33b come into contact with the insert portion 31 in the connected state of the insert portion 31 and the shank portion 32, whereby the insert portion 31 is further reliably positioned with respect to the shank portion 32 as compared with the aforementioned respective embodiments.

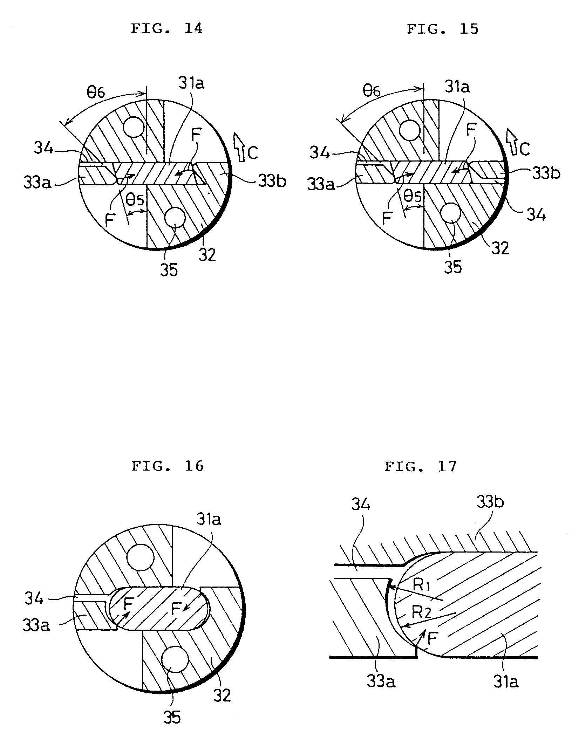

Each B - B section of the embodiments shown in Figs. 10 and 13 is as shown in Fig. 14. In this embodiment, the cross section of the held portion 31a of the insert portion 31 is in the form of a parallelogram, and both of the inner end surfaces of the holding portions 33a and 33b are inclined. The inclination angle ($\theta_6$ shown in the figure) of the inner end surfaces of the holding portions 33a and 33b is larger than the inclination angle ($\theta_5$ shown in the figure) of the side portions of the held portion 31a. In the state shown in Fig. 3B or Fig. 5B, therefore, force F in a direction shown in Fig. 14 acts substantially in line contact with the side portion of the held portion 31a in the vicinity of one edge of the inner surface of each of the holding portions 33a and 33b. This force F acts in a direction for pressing the end surface of the held portion 31a against the inner wall surface of the shank portion 32, whereby the insert portion 31 and the shank portion 32 are further reliably connected with/fixed to each other. Further, since the drill rotates in a narrow C direction shown in Fig. 14, torque which acts on the insert portion 31 during perforating by the drill also acts in the direction for pressing the end portion of the held portion 31a against the inner wall surface of the shank portion 32.

The B - B section of the embodiment shown in Fig. 11 is as shown in Fig. 15, and relations between inclination angles $\theta_5$ and $\theta_6$, force F, and a rotational direction C are similar to those in the case of Fig. 14, except for that the slit 34 is also formed on the side of the held portion 33b.

Alternatively, means for generating the force F may be implemented by making both side portions of the held portion and the inner end surfaces of the holding portions in configurations of cylindrical surfaces and changing radii of curvature thereof while making central positions thereof eccentric, in place of making the cross section of the held portion 31a in the form of a parallelogram as in the aforementioned embodiment. Namely, as shown in Fig. 17 in an enlarged manner, the radius $R_1$ of curvature of holding surfaces and the radius $R_2$ of curvature of held surfaces are so set that $R_1 < R_2$ and the centers thereof are slightly displaced, whereby holding portions 33a and 33b and held portions 31a and 31b are brought into line contact states and force F acts similarly to the cases of the embodiments shown in Figs. 14 and 15, so that similar function/effect can be attained.

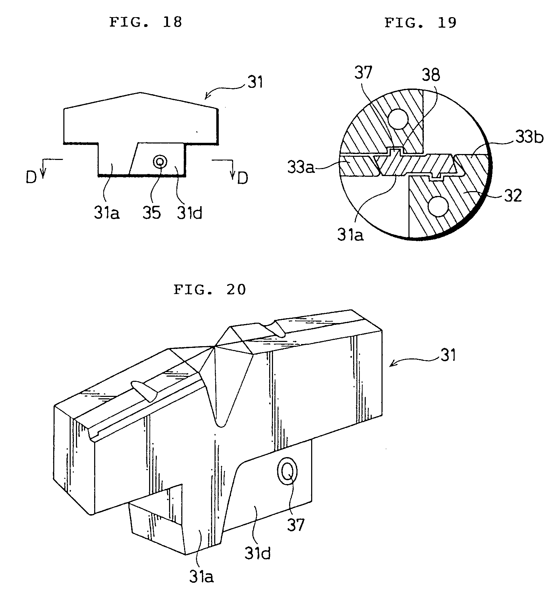

Figs. 18 to 20 show still another embodiment of this invention. In this embodiment, depressed portions 31d are formed on front and back end surfaces of a held portion 31a of an insert portion 31, and projections 37 are provided at substantially central portions thereof. These projections 37 engage with concave portions 38 which are provided on inner walls of a shank portion 32 in such a state that the insert portion 31 is connected with the shank portion 32. Thus, the insert portion 31 is stopped in the shank portion 32 in the position of the connected state, and prevented from disengagement.

In the aforementioned embodiment, it is possible to replace the insert portion by easily removing the insert portion 31 from the shank portion 32 using a jig.

While both of the insert portion 31 and the shank portion 32 or each of the aforementioned embodiments are somewhat complicated in configuration, substantially final required configurations are relatively easily manufactured in a molding stage when an injection molding technique is employed.

Embodiments of Second Example

All embodiments of the second example are common to the aforementioned embodiments of the first example, and are explained similarly to the aforementioned embodiments of the first example, on the basis of Figs. 6 to 20.

Embodiments of Third Example

As to the third example, the shank portions 32 in Figs. 6 to 17, which have been explained as the embodiments of the aforementioned first example, correspond to embodiments thereof. Therefore, the embodiments of this example are explained similarly to the aforementioned embodiments of the first example, using these figures.

Embodiments of Fourth Example

Embodiments of the fourth example are now described.

(First Embodiment)

A throw-away tipped drill in a first embodiment of this example is formed by employing surface-coated cemented carbide for an insert portion while employing steel for a shank portion, and mechanically connecting the both portions to be separable in the system shown in Fig. 6.

Surface-coated cemented carbide materials forming the insert portions in this embodiment are prepared by mixing various types of powder materials so that compositions of hard phases and binder phases reach numerical values shown in Table 1 after sintering. As to steel materials forming the shank portions, those shown in Table 1 are employed. Samples embodying the invention, shown in Table 1, are those whose insert portions and shank portions are connected in the system shown in Fig. 6. Among the samples A to D, the sample D is an example of such a case that the volume percentage of the binder phase, shown with **, is considerably less than a preferable value. As to the comparative sample E, the insert portion is made of cemented carbide but not surface-coated. As to the comparative sample F, K30-grade cemented carbide is employed as the material for the shank portion.

Table 1

| Sample | Insert Portion | | | Shank Portion |
| --- | --- | --- | --- | --- |
| | Composition of Binder Phase (mol ratio) | Binder Phase (vol.%) | Surface Coating Material | |
| A | WC : (TiTa)(CN) = 7 : 3 | 13 | TiN | SCM435 |
| B | WC : (TiTa)(CN) = 7 : 3 | 13 | $Al_2O_3$ | SKS2 |
| C | WC : (TiW)C = 5 : 5 | 18 | TiCN | SNCM420 |
| D | WC : (TiTa)(CN) = 7 : 3 | **3 | TiN | SCM435 |
| E | WC : (TiTa)(CN) = 7 : 3 | 13 | *None | SCM435 |
| F | WC : (TiTa)(CN) = 7 : 3 | 13 | TiC + $Al_2O_3$ | *K30-Grade Cemented Carbide (WC-11wt.%Co) |

Performance evaluation tests of drills were carried out using drills of 18 mm in diameter under the following conditions:

Workpiece: S50C ($H_B$ = 230)

Cutting Speed: 100 m/min., wet process (water-soluble cutting oil)
Feed: 0.15 mm/rev.
Depth: 35 mm
Criterion: Conditions of cutting edges etc. are observed after working up to end of life.
Life: Generally regarded as ended when the outer peripheral flank is worn in excess of 0.2 mm.

Results of the aforementioned drill performance evaluation tests are shown in Table 2. From the results, excellent results have been attained as to the samples A to C. Cutting edge chipping was caused as to the sample D, because the binder phase of the cemented carbide forming the insert portion was less than the preferable values of 5 to 30 percent by volume, as shown with ** in Table 1. While similar experiments were also performed (lower column of Table 2) as to conventional general four types of drills for the purpose of reference, it is understood that the samples A to C are superior also from these results.

Table 2

| Sample | | Number of Worked Holes | Amount of Outer Peripheral Front Flank Wear (mm) | Depth of Inner Peripheral Face Adhesive Wear (mm) |
|---|---|---|---|---|
| | A | 3500 | 0.2 | 0.01 |
| | B | 4100 | 0.2 | 0.02 |
| | C | 3700 | 0.2 | 0.01 |
| | D | 117 | Test stopped by cutting edge chip | |
| | E | 1200 | 0.2 | 0.12 |
| | F | 1550 | Test stopped by breakage of shank portion | |
| | Cutting Edge: Coated High-Speed Steel | 20 | 0.2 (chipping: 2 portions) | 0.10 |
| Reference | Cutting Edge: Alumina | 1800 | Test stopped by cutting edge chip | |
| | Integral Coated High-Speed Steal | 40 | Test stopped by cutting edge chipping | |
| | Integral Coated Cemented Carbide | 1990 | Test stopped by breakage of shank portion | |

(Second Embodiment)

A second embodiment of this example is now described. In this embodiment, cutting characteristics were compared in relation to samples of throw-away tipped drills having insert portions and shank portions of the same materials as those of the sample A in the aforementioned first embodiment respectively, as to three types of connection systems, i.e., the self-grip system shown in Fig. 6 (sample G), the two-flute screwed drill shown in Figs. 2 to 4 (sample H) and the one-flute screwed drill shown in Fig. 5 (sample I), and a brazing-connected drill having a cutting edge of cemented carbide (sample J).

Cutting conditions thereof are as follows:

Workpiece: S50C ($H_B$ = 220)

Cutting Speed V: 50 m/min., 150 m/min. (water-soluble cutting oil)

Feed: 0.2 mm/rev.

Depth: 40 mm

Diameter of Worked Hole: 20 mm

Table 3 shows the results of evaluated characteristics in this embodiment. The cutting characteristics, represented by stability, can be regarded as showing excellent cutting characteristics as horizontal components and thrusts of cutting balance acting on the drills by cutting resistance shown in Table 3 are reduced and values of dependency are reduced with respect to the speeds.

From the results of this embodiment, it is understood that the self-grip system of the sample G, embodying the invention, exhibits the most excellent cutting characteristics as compared with other systems.

Table 3

| Compared Characteristics | Cutting Balance (Horizontal Component) | | Thrust (N) | | Torque (J) | Hole Diameter Over Size (μm) | Remarks |
|---|---|---|---|---|---|---|---|
| Sample \ Cutting Speed V (m/min.) | 50 | 150 | 50 | 150 | 50 | 150 | |
| G Self-Grip System | 190 | 180 | 1800 | 1850 | 3300 | 20 | Throw-Away Type shown in Fig. 1 |
| H Two-Flute Screwed System | 1610 | 590 | 1980 | 2050 | 3800 | 200 | Throw-Away Type of Figs. 5A to C |
| I One-Flute Screwed System | 400 | unmeasur-able | 7200 | unmeasur-able | 4200 | 30 | Throw-Away Type shown in Fig. 6 Cutting Edge Departure at V=150. |
| J Brazing Connection System with Cutting Edge of Cemented Carbide | 150 | unmeasur-able | 2700 | unmeasur-able | 6200 | 20 | Helical Flute, Cross Thinnig, Number of Resharpenable Times:5. Could not part chips and broken at V=150 |

Note) Materials for insert portions and shank portions of the samples G, H and I were prepared from those identical to the sample A in Table 1.

(Third Embodiment)

The same cemented carbide base material as the inventive sample B of the aforementioned first embodiment, i.e., cemented carbide having a hard phase of WC:(TiTa)(CN) = 7:3 and 13 percent by volume of a binder phase was worked into a configuration for a drill of 10 mm in diameter, and coated with TiCN of 2 $\mu$m and A$\ell$zk2$_O$3 of 2 $\mu$m, as well as TiN of 1 $\mu$m for the uppermost layer, as surface coating materials.

This drill was subjected to a performance evaluation test under the following conditions:

Workpiece: S50C ($H_B$ = 220)

Cutting Speed: 80 m/min., wet process (water-soluble cutting oil)

Feed: 0.18 mm/rev.

Depth: 20 mm

As the result, it was possible to work 2000 holes (each length of cut: 40 mm), and the worn state was normal.

Embodiment of Fifth Example

An embodiment of the fifth example is now described.

Throw-away tipped drills in the embodiment of this example are formed by employing silicon nitride sintered bodies for insert portions while employing steel for shank portions, and separably mechanically connecting both portions with each other in the system shown in Fig. 6.

The silicon nitride sintered bodies forming the insert portions in this embodiment are prepared by mixing various types of powder materials so that compositions reach numerals shown in Table 4 after sintering. As to the steel forming the shank portions, those of materials shown in Table 4 are employed. As to samples in this embodiment, shown in Table 4, all of the insert portions and shank portions are connected with each other in the system shown in Fig. 6. Among the samples A to C, the sample C is an example of such a case that the weight percentage of Si$_3$N$_4$ shown with ** is considerably less than a preferable value. The comparative sample D, whose insert portion is of a silicon nitride sintered body, has a material for the shank portion, shown with *, which is not steel but P30-grade cemented carbide.

Table 4

| Sample | Insert Portion<br>Starting Composition (wt.%) | Shank Portion |
|---|---|---|
| A | $Si_3N_4(93.0)$, $MgO(1.5)$, $Y_2O_3(4.5)$, $Al_2O_3$ (1.0) | SKH51 |
| B | SIALON (94.0), $MgO(2.0)$, $Y_2O_3(2.0)$, $Al_2O_3(2.0)$ | SCM435 |
| C | $**Si_3N_4(78.0)$, $MgO(10.0)$, $Y_2O_3(7.0)$ | SCM435 |
| D | $\beta-Si_3N_4(93.0)$, $MgO(2.5)$, $Y_2O_3(4.5)$, $Al_2O_3(5.0)$ | *P30-Grade Cemented Carbide |

Note 1) Starting composition indicates distribution ratio of powder in mixing.
Note 2) * shows that the shank is not made of steel, and ** shows deviation from preferable range.

Performance evaluation tests of drills were carried out using drills of 18 mm in diameter under the following conditions:

Workpiece: S50C ($H_B$ = 230)
Cutting Speed: 150 m/min., wet process (water-soluble cutting oil)

Feed: 0.10 mm/rev.

Depth: 15 mm

Criterion: Conditions of cutting edges etc. are observed after working up to end of life.

Life: Generally regarded as ended when the outer peripheral flank is worn in excess of 0.2 mm.

Results of the aforementioned drill performance evaluation tests are shown in Table 5. From these results, excellent results have been obtained as to the samples A and B. As to the sample C, the number of worked holes with respect to the same amount of wear is smaller as compared with A and B, due to the fact that the weight percentage of $Si_3N_4$ in the silicon nitride sintered body forming the insert portion does not satisfy the condition of at least 80 %, which is a preferable value, as shown in Table 4 with **. For the purpose of reference, similar experiments were also made as to conventional drills having cutting edges of coated cemented carbide or coated high-speed steel (lower column of Table 5), while it is understood that the samples A to C are superior also from these results.

Table 5

| Sample | | Number of Worked Hole | Amount of Outer Peripheral Front Flank Wear (mm) |
|---|---|---|---|
| | A | 3810 | 0.2 |
| | B | 3250 | 0.2 |
| | C | 1890 | 0.2 |
| | D | 2240 | Shank portion broken |
| Reference | E | 840 | 0.2 |
| | F | 0 | Cutting edge remarkably worn |
| Note) E: Cutting edge of coated cemented carbide<br>F: Cutting edge of coated high-speed steel | | | |

## Embodiment of Sixth Example

An embodiment of the sixth example is now described.

Throw-away tipped drills in this example are formed by employing cermet alloys for insert portions while employing alloy steel materials for shank portions, and separably mechanically connecting the both portions with each other. The cermet alloys forming the insert portions were prepared by mixing various powder materials so that compositions of hard dispersed phases, compositions of binder phases and grain size abundance ratios of the hard dispersed phases reached the numerical values shown in Table 6 after sintering. The alloy steel materials forming the shank portions were prepared from those of the materials shown in Table 6.

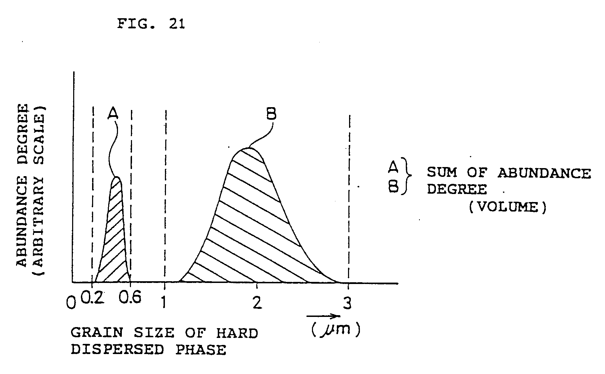

Fig. 21 shows grain size distribution of a hard dispersed phase in a cermet alloy forming the insert portion of a drill. Referring to this figure, symbol A represents abundance degree distribution of fine grains, and symbol B represents abundance degree distribution of coarse grains. The volume ratio of a fine grain group to a coarse grain group is shown in Table 6 as A/B. The samples shown in the following embodiment were prepared using drills of 16 mm in diameter, which were obtained by the connection systems shown in Figs. 6 to 8.

Table 6 shows compositions and grain size distributions etc. of hard alloys forming the drills and drills prepared for the purpose of comparison. Referring to Table 6, the comparative sample F was so prepared that a nonmetal atom ratio and a grain size abundance ratio of the hard dispersed phase of the insert portion were out of a preferred range, as shown with *. The comparative sample G was so prepared that the amount of a metallic binder phase of the insert portion was out of a preferred range. As to the comparative sample H, K30-grade cemented carbide was employed as the shank portion.

Numerals which are not preferred embodiments are shown with * respectively.

Table 6

| Clasification | Sample | Insert Portion | | | | | | | | | Shank Portion (under JIS Standard) |
|---|---|---|---|---|---|---|---|---|---|---|---|
| | | Hard Dispersed Phase | | | | | | Amount of Binder Phase (wt.%) | | Grain Size Abundance Ratio of Hard Phase A/B (*1) | |
| | | Component Ratio of Metal Atom | | | | | Nonmetal Atomic Ratio N/C+N | | | | |
| | | Ti | Ta | W | Mo | Nb | | Ni | Co | | |
| | A | 80 | 5 | 10 | 1 | 4 | 0.41 | 10 | 10 | 2.0 | SKD61 |
| | B | 88 | 5 | 7 | - | - | 0.38 | 7 | 15 | 1.0 | SCM435 |
| | C | 78 | 9 | 8 | 2 | 3 | 0.32 | 10 | 8 | 1.0 | SNCM439 |
| | D | 82 | 8 | 10 | - | - | 0.43 | 8 | 8 | 1.8 | SNC415 |
| | E | 75 | 5 | 15 | 2 | 3 | 0.48 | 11 | 8 | 2.5 | SUP7 |
| | F | 80 | 5 | 10 | 1 | 4 | 0.05* | 10 | 10 | 0.2* | SKD61 |
| | G | 80 | 5 | 10 | 1 | 4 | 0.43 | 15* | 20* | 1.2 | SCM435 |
| | H | 88 | 5 | 7 | - | - | 0.47 | 11 | 8 | 1.8 | K30-Grade Cemented Carbide (WC-10wt.%Co) |

(*1) Grain size abundance ratio of hard phase : $\dfrac{A}{B}$ (volume ratio), (see Fig. 23)

Performance evaluation tests of drills were carried out under the following conditions:
Workpiece: S50C ($H_B$ = 220)
Cutting Speed: 120 m/min., wet process (water-soluble cutting oil)

Feed Rate: 0.15 mm/rev.

Depth: 35 mm

Criterion: Conditions of cutting edges etc. are observed after working up to end of life.

Life: Generally regarded as ended when the outer peripheral flank is worn in excess of 0.2 mm.

Results of the aforementioned drill performance evaluation tests are shown in Table 7. Referring to Table 7, first, toughness of cermet forming the insert portion was deteriorated and the cutting edge portion was chipped in the comparative sample F, in comparison of the samples A and B with the comparative sample F.

Next, it was recognized that the inner peripheral face adhesive wear depth was deep in the comparative sample G, which was inferior in adhesion resistance, in comparison of the samples A and B with the comparative sample G.

In comparison of the samples A and B with the comparative sample H, further, the comparative sample H was inferior in shank strength, and the shank portion was broken.

Further, the samples C, D and E also showed excellent performances substantially similar to those of the samples A and B, from a synthetic point of view.

The performance tests were made also with currently used coated high-speed steel or coated cemented carbide drills for the purpose of reference, in addition to these samples. In comparison of these drills with the drills of the samples A, B, C, D and E, it is obvious that performances of the drills of the samples are superior.

Table 7

| Clasification | Sample | Number of Drilling | Amount of Outer Peripheral Front Flank Wear | Depth of Inner Peripheral Face Adhesive Wear |
|---|---|---|---|---|
| | A | 2100 holes | 0.2 | 0.01 |
| | B | 1989 holes | 0.2 | 0.02 |
| | C | 1970 holes | 0.2 | 0.01 |
| | D | 2050 holes | 0.2 | 0.02 |
| | E | 1959 holes | 0.2 | 0.02 |
| | F | 710 holes | Test stopped by cuting edge chip | |
| | G | 385 holes | 0.2 | 0.12 |
| | H | 625 holes | Test stopped by breakage of shank portion | |
| Reference | Coated High-Speed Steal | 124 holes | Test stopped by cutting edge chip | |
| | Coated Cemented Carbide (Single Material) | 1005 holes | Test stopped by breakage of shank portion | |
| | Coated Cemented Carbide (Cutting Edge Alone Brazed) | 989 holes | Test stopped by cutting edge chipping | |

19

Industrial Applicability

According to the first example to the third example, as hereinabove described, the insert portion and the shank portion are connected with/fixed to each other without separately requiring fastening means such as screwing. Therefore, it is possible to manufacture a small-diameter throw-away tipped drill of not more than 10 mm in diameter, which has not been implemented by the conventional system of fixing an insert portion to a shank portion by screwing or the like. In a step of connecting the insert portion and the shank portion with each other, further, the drill can be assembled by simply performing press fitting without requiring any operation such as screwing, whereby workability is improved.

According to the fourth example to the sixth example, further, a material which is excellent in wear resistance, adhesion resistance or thermal cracking resistance (chipping resistance) is employed as a material for the insert portion of the throw-away tipped drill while a material which is excellent in toughness and is at a relatively low cost is employed for the shank portion and both portions are mechanically connected with each other, thereby forming a drill. Thus, a throw-away tipped drill having high reliability, high life and high quality, which causes no abrupt breakage or the like, is provided at a relatively low cost.

## Claims

1. A drill comprising an insert (31) for cutting a work piece, and a shank (32) to be mounted on a prescribed position of a cutting machine, said insert (31) and said shank (32) being engaged with each other so as to be separably mechanically connected with each other, wherein said insert (31) has a held portion comprising a pair of approximately parallel main surfaces (31a) and a pair of side surfaces (31b), said shank (32) is provided with an engaging portion having inner walls abutting said pair of main surfaces (31a) and said pair of side surfaces (31b) of said insert (31), respectively, **characterized in that** at least one essentially axially extending slit (34) is formed on said shank (32), said engaging portion of the shank (32) is provided with opposite and separate left and right holding portions (33a, 33b), each comprising a first surface for engaging one side surface (31b) of said insert (31) and a second holding surface for engaging one main surface (31a) of the insert (31), the slit being formed on at least one of said left and right holding portions between said first and second holding surfaces, and the first holding surface of the left and right holding portions (33a, 33b) which abut said pair of side surfaces (31b) of said insert (31), hold said pair of side surfaces (31b) of said insert (31) by elastic force generated as a result of the movement of at least one of the first holding surfaces in a direction approximately parallel to said pair of main surfaces (31a) of said insert (31), and are arranged to press each of the main surfaces (31a) of the insert (31) against each of the corresponding second holding surfaces of the shank (32).

2. A drill in accordance with claim 1, **wherein** said first surfaces of the holding portions (33a, 33b) of the shank (32) and the side surfaces (31b) of said held portion are both or either ones tapered, and the angle of said tapering is so formed that said holding portions and said held portion come into surface contact with each other and enter press-fitted states in an engaging state of said insert (31) and said shank (32).

3. A drill in accordance with claim 2, **wherein** slits (34) are formed in both the left and right holding portions (33a, 33b) of said shank (32) so that said first holding surfaces mutually move in engagement of said insert (31) and said shank (32) to be so elastically deformed that an angle formed by said holding portions coincides with an angle formed by the held portion of said insert (31).

4. A drill according to one of the preceding claims, **wherein** said insert (31) is made of surface-coated cemented carbide or cemented carbide, and said shank (32) is formed of steel.

5. A drill in accordance with claim 4, **wherein** said insert (31) is coated with one layer or at least two layers of one more materials selected from $Al_2O_3$ and carbides, nitrides, borides, carbo-nitrides, carbo-oxides, carbo-oxynitrides, boronitrides of metals belonging to the groups IVa, Va and VIa of the periodic table as a surface coating material for cemented carbide and wherein cemented carbide forming a base material for said insert (31) is formed by a hard phase of B1 type solid solution composed of WC and one or more types of carbides, nitrides and carbo-nitrides of metals belonging to the groups IVa, Va and VIa of the periodic table and a binder phase of an iron family metal mainly composed of 5 to 30 percent by volume of Co.

6. A drill in accordance with one of claims 1 to 3, **wherein** said insert (31) is made of a silicon nitride sintered body.

7. A drill in accordance with claim 6, **wherein** silicon nitride sintered body comprises a binder phase of $Si_3N_4$ or SIALON $(Si_0 \text{ to } _z Al_zO_zN_{8-z} : z = 0 \text{ to } 4.2)$.

8. A drill in accordance with claim 7, **wherein** a binder phase occupies at least 80 percent by weight in the sintered body in said silicon nitride sintered body.

9. A drill in accordance with one of the claims 1 to 3, **wherein** said insert (31) is formed of cermet consisting of a hard dispersed phase mainly composed of any one of titanium and carbides, nitrides and double carbo-nitrides of at least one of the metals belonging to groups IVa, Va and VIa of the periodic table excluding titanium, and a metallic binder phase mainly composed of nickel and cobalt, the composition of said hard dispersed phase is expressed in $(Ti_a M_b)$ $(C_c N_d)$ [where symbol M represents at least one of the metals belonging to groups IVa, Va and VIa of the periodic table excluding Ti, symbols $\underline{a}$, $\underline{b}$, $\underline{c}$ and $\underline{d}$ represent molar fractions, $a + b = 1$, $c + d = 1$, $0,5 \leq a \leq 0.95$ and $0.1 \leq d \leq 0.7$], said hard dispersed phase at least comprises a fine grain group whose mean particle diameter is at least 0.2 μm and not more than 0.7 μm and a coarse grain group whose mean particle diameter is at least 1 μm and not more than 3 μm, and the volume ratio of said fine grain group to said coarse grain group is at least 0.3 and not more than 3, the rate of said metallic binder phase contained in said cermet is at least 5 percent by weight and not more than 30 percent by weight, and said shank portion (32) is formed of alloy steel, and separably mechanically connected with the insert (31).

10. A shank for a drill to be engaged with an insert (31), wherein said shank comprises an engaging portion having inner walls for abutting a pair of main surfaces and a pair of side surfaces (31b) of said insert (31), respectively, **characterized in that** said engaging portion is provided with at least one slit (34) and said engaging portion of the shank (32) is provided with opposite and separate left and right holding portions (33a, 33b), each comprising a first holding surface for engaging one side surface (31b) of said insert (31) and a second holding surface for engaging one main surface (31a) of the insert (31), the slit being formed on at least one of said left and right holding portions between said first and second holding surfaces such that the first holding surfaces are relatively movable to each other in a direction approximately parallel to the second holding surfaces, and the first holding surfaces of the left and right holding portions (33a, 33b) which are arranged to abut said pair of said side surfaces (31b) of said insert (31), hold said pair of side surfaces (31b) of said insert (31) by elastic force generated as a result of the movement of at least one of the first holding surfaces in a direction approximately parallel to said pair of main surfaces (31a) of said insert (31), and are arranged to press each of the main surfaces (31a) of the insert (31) against each of the corresponding second holding surfaces of the shank (32).

11. A shank in accordance with claim 10, **wherein** said slits (34) are so formed that both of an opposite pair of first holding surfaces of said holding portions (33a, 33b) are elastically deformed by mutual movement of opposite surfaces thereof.

12. A shank in accordance with claims 10 or 11, **wherein** the opposite first holding surfaces of said holding portions (33a, 33b) are mutually tapered.

## Patentansprüche

1. Bohrer, umfassend einen Einsatz (31) zum Schneiden eines Werkstücks und einen Schaft (32), der an einer vorgeschriebenen Stelle einer Schneidmaschine zu befestigen ist, wobei der Einsatz (31) und der Schaft (32) miteinander derart in Eingriff stehen, daß sie trennbar mechanisch miteinander verbunden sind, wobei der Einsatz (31) einen gehaltenen Teil besitzt, der ein Paar von in etwa parallelen Hauptflächen (31a) und ein Paar Seitenflächen (31b) umfaßt, wobei der Schaft (32) mit einem Erfassungsbereich mit Innenwänden versehen ist, die an dem Paar Hauptflächen (31a) bzw. dem Paar Seitenflächen (31b) des Einsatzes (31) anliegen, **dadurch gekennzeichnet, daß** mindestens ein sich im wesentlichen axial erstreckender Schlitz (34) an dem Schaft (32) ausgebildet ist, der Erfassungsbereich des Schafts (32) mit gegenüberliegenden und getrennten linken und rechten Haltebereichen (33a, 33b) versehen ist, die jeweils eine erste Fläche für das Erfassen einer Seitenfläche (31b) des Einsatzes (31) und eine zweite Haltefläche zum Erfassen einer Hauptfläche (31a) des Einsatzes (31) aufweisen, wobei der Schlitz an mindestens einem der linken und rechten Haltebereiche zwischen den ersten und zweiten Halteflächen ausgebildet ist und die erste Haltefläche der linken und rechten Haltebereiche (33a, 33b), die an dem Paar Seitenflächen (31b) des Einsatzes (31) anliegen, das Paar Seitenflächen (31b) des Einsatzes (31) durch elastische Kraft halten, die als Ergebnis der Bewegung mindestens einer der ersten Halteflächen in einer Richtung in etwa parallel zu dem Paar Hauptflächen (31a) des Einsatzes (31) erzeugt wird, und im Hinblick darauf angeordnet sind, jede der Hauptflächen (31a) des Einsatzes (31) gegen jede der entsprechenden zweiten Halteflächen des Schafts (32) zu pressen.

2. Bohrer nach Anspruch 1, **dadurch gekennzeichnet, daß** die ersten Flächen der Haltebereiche (33a, 33b) des Schafts (32) und/oder die Seitenflächen (31b) des gehaltenen Bereichs verjüngt sind und der Verjüngungswinkel so ausgebildet ist, daß die Haltebereiche und der gehaltene Bereich in Oberflächenkontakt miteinander kommen und sich in dem Erfassungszustand des Einsatzes (31) und des Schafts (32) im Preßsitz befinden.

3. Bohrer nach Anspruch 2, **dadurch gekennzeichnet, daß** Schlitze (34) sowohl in dem linken als auch dem rechten Haltebereich (33a, 33b) des Schafts (32) ausgebildet sind, so daß sich die ersten Halteflächen gemeinsam in Eingriff des Einsatzes (31) und des Schafts (32) bewegen, um derart elastisch deformiert zu werden, daß ein von den Haltebereichen gebildeter Winkel mit einem von dem gehaltenen Bereich des Einsatzes (31) gebildeten Winkel (31) zusammenfällt.

4. Bohrer nach einem der vorhergehenden Ansprüche, **dadurch gekennzeichnet, daß** der Einsatz (31) aus oberflächenbeschichtetem Hartmetall oder Hartmetall hergestellt ist und der Schaft (32) aus Stahl hergestellt ist.

5. Bohrer nach Anspruch 4, **dadurch gekennzeichnet, daß** der Einsatz mit einer Schicht oder mindestens zwei Schichten eines Materials bzw. mehrerer Materialien beschichtet ist, die ausgewählt sind aus $Al_2O_3$ und Carbiden, Nitriden, Boriden, Carbonitriden, Carbo-oxiden, Carbo-oxynitriden, Bornitriden der Metalle der Gruppen IVa, Va und VIa des Periodensystems als Oberflächenbeschichtungsmaterial für Hartmetall und daß ein ein Basismaterial für den Einsatz (31) bildendes Hartmetall durch eine harte Phase der Feststofflösung des B1-Typs, die aus WC und einem oder mehr Arten von Carbiden, Nitriden und Carbonitriden der Metalle der Gruppen IVa, Va und VIa des Periodensystems und einer Bindemittelphase eines Metalls der Eisenfamilie, das hauptsächlich aus 5 bis 30 Gew.-% Co besteht, gebildet ist.

6. Bohrer nach einem der Ansprüche 1 bis 3, **dadurch gekennzeichnet, daß** der Einsatz (31) aus einem Siliciumnitridsinterkörper hergestellt ist.

7. Bohrer nach Anspruch 6, **dadurch gekennzeichnet, daß** der Siliciumnitridsinterkörper eine Bindemittelphase von $Si_3N_4$ oder SIALON ($Si_0$ bis $_z$ $Al_zO_zN_{8-z}$ : Z = 0 bis 4,2) besteht.

8. Bohrer nach Anspruch 7, **dadurch gekennzeichnet, daß** eine Bindemittelphase mindestens 80 Gew.-% in dem Sinterkörper in dem Siliciumnitridsinterkörper einnimmt.

9. Bohrer nach einem der Ansprüche 1 bis 3, **dadurch gekennzeichnet, daß** der Einsatz (31) aus Cermet gebildet ist, das aus einer harten dispergierten Phase, die hauptsächlich aus Titan und Carbiden, Nitriden, Doppelcarbonitriden mindestens eines der Metalle der Gruppen IVa, Va und VIa des Periodensystems ausschließlich Titan besteht, und einer metallischen Bindemittelphase besteht, die hauptsächlich aus Nickel und Kobalt besteht, wobei die Zusammensetzung der harten dispergierten Phase in $(Ti_aM_b)$ $(C_cN_d)$ ausgedrückt ist [wobei das Symbol M mindestens eines der Metalle der Gruppen IVa, Va und VIa des Periodensystems ausschließlich Ti darstellt, die Symbole a, b, c und d Molenbrüche darstellen, a + b = 1 , c + d = 1 , 0,5 a 0,95 und 0,1 d 0,7], die harte dispergierte Phase mindestens eine feinkörnige Gruppe, deren mittlerer Teilchendurchmesser mindestens 0,2 µm und nicht mehr als 0,7 µm beträgt, und eine grobkörnige Gruppe umfaßt, deren mittlerer Teilchendurchmesser mindestens 1 µm und nicht mehr als 3 µm beträgt, und das Volumenverhältnis der feinkörnigen Gruppe zu der grobkörnigen Gruppe mindestens 0,3 und nicht mehr als 3 ist, das Verhältnis der in dem Cermet enthaltenen, metallischen Bindemittelphase mindestens 5 Gew.-% und nicht mehr als 30 Gew.-% ist und der Schaftbereich (32) aus einer Legierungsstahl gebildet ist und getrennt mit dem Einsatz (31) mechanisch verbunden ist.

10. Schaft für einen mit einem Einsatz (31) in Eingriff zu bringenden Bohrer, wobei der Schaft einen Erfassungsbereich mit Innenwänden zum Anliegen an einem Paar Hauptflächen bzw. einem Paar Seitenflächen (31b) des Einsatzes (31) aufweist, **dadurch gekennzeichnet, daß** der Erfassungsbereich mit mindestens einem Schlitz (34) versehen ist und der Erfassungsbereich des Schafts (32) mit gegenüberliegenden und getrennten linken und rechten Haltebereichen (33a, 33b) versehen ist, die jeweils eine erste Haltefläche zum Erfassen einer Seitenfläche (31b) des Einsatzes (31) und eine zweite Haltefläche zum Erfassen einer Hauptfläche (31a) des Einsatzes (31) umfassen, wobei der Schlitz an mindestens einem der linken und rechten Haltebereiche zwischen den ersten und zweite Halteflächen derart ausgebildet ist, daß die ersten Halteflächen relativ zueinander in einer Richtung in etwa parallel zu den zweiten Halteflächen bewegbar ist und die ersten Halteflächen der linken und rechten Haltebereiche (33a, 33b), die im Hinblick darauf angeordnet sind, an dem Paar von Seitenflächen (31b) des Einsatzes (31) anzuliegen, das Paar Seitenflächen (31b) des Einsatzes (31) durch die elastische Kraft halten, die als Ergebnis der Bewegung von mindestens einer der ersten Halteflächen in einer Richtung in etwa parallel zu dem Paar Hauptflächen (31a) des Einsatzes (31) erzeugt wird, und im Hinblick darauf angeordnet sind, jede der Hauptflächen (31a) des Einsatzes (31) gegen jede der entsprechenden zweiten Halteflächen des Schafts (32) zu pressen.

**11.** Schaft nach Anspruch 10, **dadurch gekennzeichnet, daß** die Schlitze (34) derart ausgebildet sind, daß beide Flächen eines Paars gegenüberliegender erster Halteflächen der Haltebereiche (33a, 33b) durch die gemeinsame Bewegung von deren gegenüberliegenden Flächen elastisch deformiert werden.

**12.** Schaft nach Anspruch 10 oder 11, **dadurch gekennzeichnet, daß** die gegenüberliegenden ersten Halteflächen der Haltebereiche (33a, 33b) gemeinsam verjüngt sind.

## Revendications

**1.** Foret comportant un élément rapporté (31) destiné à couper une pièce à usiner, et une queue (32) à monter dans une position prescrite d'une machine de coupe, ledit élément rapporté (31) et ladite queue (32) étant en prise l'un avec l'autre de manière à être liés mécaniquement l'un à l'autre d'une manière séparable, dans lequel ledit élément rapporté (31) a une partie. tenue comportant une paire de surfaces principales approximativement parallèles (31a) et une paire de surfaces latérales (31b), ladite queue (32) est pourvue d'une partie de prise possédant des parois intérieures s'appliquant sur ladite paire de surfaces principales (31a) et ladite paire de surfaces latérales (31b) dudit élément rapporté (31), respectivement, caractérisé en ce qu'au moins une fente s'étendant pratiquement axialement (34) est formée sur ladite queue (32), ladite partie de prise de la queue (32) est pourvue de parties de fixation gauche et droite opposées et séparées (33a, 33b), comportant chacune une première surface destinée à venir en prise avec une surface latérale (31b) dudit élément rapporté (31) et une seconde surface de fixation destinée à venir en prise avec une surface principale (31a) de l'élément rapporté (31), la fente étant formée sur au moins une desdites parties de fixation gauche et droite entre lesdites première et seconde surfaces de fixation, et les premières surfaces de fixation des parties de fixation gauche et droite (33a, 33b) qui s'appliquent sur ladite paire de surfaces latérales (31b) dudit élément rapporté (31), tiennent ladite paire de surfaces latérales (31b) dudit élément rapporté (31) par une force élastique résultant du mouvement d'au moins une des premières surfaces de fixation dans une direction approximativement parallèle à ladite paire de surfaces principales (31a) dudit élément rapporté (31), et sont disposées de façon à presser chacune des surfaces principales (31a) dudit élément rapporté (31) contre chacune des secondes surfaces de fixation correspondantes de la queue (32).

**2.** Foret selon la revendication 1, dans lequel lesdites premières surfaces des parties de fixation (33a, 33b) de la queue (32) et les surfaces latérales (31b) de ladite partie tenue sont toutes deux ou soit l'une, soit l'autre taillées en cône, et que l'angle dudit cône a une forme telle que les surfaces desdites parties de fixation et de ladite partie tenue viennent en contact l'une avec l'autre et réalisent des ajustages serrés en mettant en prise ledit élément rapporté (31) et ladite queue (32).

**3.** Foret selon la revendication 2, dans lequel des fentes (34) sont formées à la fois dans les parties de fixation gauche et droite (33a, 33b) de ladite queue (32) de manière que lesdites premières surfaces de fixation se déplacent mutuellement pour venir en prise avec ledit élément rapporté (31) et ladite queue (32) afin d'être déformées élastiquement de manière telle qu'un angle formé par lesdites parties de fixation coïncide avec un angle formé par la partie tenue dudit élément rapporté (31).

**4.** Foret selon l'une des revendications précédentes, dans lequel ledit élément rapporté (31) est réalisé en carbure cémenté à revêtement de surface ou en carbure cémenté, et ladite queue (32) est en acier.

**5.** Foret seion la revendication 4, dans lequel ledit élément rapporté (31) est revêtu d'une couche ou d'au moins deux couches d'un ou plusieurs matériaux choisis parmi $Al_2O_3$ et des carbures, nitrures, borures, carbo-nitrures, carbo-oxydes, carbo-oxynitrures, boronitrures de métaux appartenant aux groupes IVa, Va et VIa du tableau périodique comme matériau de revêtement de surface pour le carbure cémenté et dans lequel le carbure cémenté formant un matériau de base pour ledit élément rapporté (31) est constitué d'une phase dure de solution solide de type B1 composée de carbure de tungstène (WC) et d'un ou plusieurs types de carbures, nitrures et carbonitrures de métaux appartenant aux groupes IVa, Va et VIa du tableau périodique et d'une phase liante d'un métal de la famille du fer composée principalement de 5 à 30 pour cent en volume de Co.

**6.** Foret selon l'une des revendications 1 à 3, dans lequel ledit élément rapporté (31) est réalisé en un corps fritté de nitrure de silicium.

**7.** Foret selon la revendication 6, dans lequel le corps fritté de nitrure de silicium comporte une phase liante de $Si_3N_4$ ou SIALON ($Si_0$ à $_z Al_z O_z N_{z-8}$ : z = 0 à 4,2).

8. Foret selon la revendication 7, dans lequel une phase liante occupe au moins 80 pour cent en masse du corps fritté dans ledit corps fritté de nitrure de silicium.

9. Foret selon l'une des revendications 1 à 3, dans lequel ledit élément rapporté (31) est formé d'un cermet consistant en une phase dure dispersée composée principalement de l'un quelconque des composants titane et carbures, nitrures et doubles carbonitrures d'au moins un des métaux appartenant aux groupes IVa, Va et VIa du tableau périodique sauf le titane, et d'une phase liante métallique composée principalement de nickel et de cobalt, la composition de ladite phase dure dispersée étant exprimée en $(Ti_aM_b)$ $(C_cN_d)$ [où le symbole M représente au moins un des métaux appartenant aux groupes IVa, Va et VIa du tableau périodique sauf le titane, les symboles a, b, c et d représentent des fractions molaires, $a + b = 1$, $c + d = 1$, $0,5 \leq a \leq 0,95$ et $0,1 \leq d \leq 0,7$], ladite phase dure dispersée comportant au moins un groupe à grain fin dont les particules ont un diamètre moyen d'au moins 0,2 μm et d'au plus 0,7 μm et un groupe à gros grain dont les particules ont un diamètre moyen d'au moins 1μm et d'au plus 3μm, et le rapport volumique dudit groupe à grain fin au groupe à gros grain étant d'au moins 0,3 et d'au plus 3, le taux de la phase liante métallique contenue dans ledit cermet étant d'au moins 5 pour cent en masse et d'au plus 30 pour cent en masse, et ladite partie de queue (32) étant en acier allié, et liée mécaniquement de manière séparable à l'élément rapporté (31).

10. Queue de foret à mettre en prise avec un élément rapporté (31), dans laquelle ladite queue comporte une partie de prise possédant des parois internes destinées à s'appliquer sur une paire de surfaces principales et une paire de surfaces latérales (31b) dudit élément rapporté (31), respectivement, caractérisée en ce que ladite partie de prise est pourvue d'au moins une fente (34) et ladite partie de prise de la queue (32) est pourvue de parties de fixation gauche et droite opposées et séparées (33a, 33b), comportant chacune une première surface de fixation destinée à venir en prise avec une surface latérale (31b) dudit élément rapporté (31) et une seconde surface de fixation destinée à venir en prise avec une surface principale (31a) dudit élément rapporté (31), la fente étant formée sur au moins une desdites parties de fixation gauche et droite entre lesdites première et seconde surfaces de fixation de manière que les premières surfaces de fixation puissent se déplacer l'une par rapport à l'autre dans une direction approximativement parallèle aux secondes surfaces de fixation, et les premières surfaces de fixation des parties de fixation gauche et droite (33a, 33b) qui sont disposées de façon à s'appliquer sur ladite paire de surfaces latérales (31b) dudit élément rapporté (31), tiennent ladite paire de surfaces latérales (31b) dudit élément rapporté (31) par une force élastique résultant du mouvement d'au moins une des premières surfaces de fixation dans une direction approximativement parallèle à ladite paire de surfaces principales (31a) dudit élément rapporté (31), et sont disposées pour presser chacune des surfaces principales (31a) dudit élément rapporté (31) contre chacune des secondes surfaces de fixation correspondantes de la queue (32).

11. Queue selon la revendication 10, dans laquelle lesdites fentes (34) ont une forme telle que les deux surfaces d'une paire opposée des premières surfaces de fixation desdites parties fixation (33a, 33b) sont déformées élastiquement par déplacement mutuel de leurs surfaces opposées.

12. Queue selon les revendications 10 ou 11, dans laquelle les premières surfaces de fixation opposées desdites parties de fixation (33a, 33b) sont mutuellement taillées en cône.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

GRAIN SIZE OF HARD
DISPERSED PHASE